# EUROPEAN PATENT APPLICATION

(11) **EP 0 992 266 A2**
(43) Date of publication of application: **12.04.2000**
(21) Application number: 99119176.8
(22) Date of filing: 06.10.1999
(51) Int. Cl.: A63F 13/10

(54) **Game device, image display method, and storage medium**

(30) Priority: 07.10.1998 JP 28563798
(71) Applicant: Konami Co., Ltd., Kobe-shi, Hyogo-ken (JP)
(72) Inventor: Shimomura, Satoshi, Tokyo, (JP); Kubo, Morikuni, Tokyo (JP); Suzuki, Atsushi, Hoya-shi, Tokyo (JP)
(74) Representative: VOSSIUS & PARTNER

(57) **Abstract**

A game device, display method, and storage medium are provided, whereby players can be made to associate more closely with virtual characters appearing in a game and the level of interest and variety in the game can be raised, by causing the virtual game characters to behave similarly to real human beings. Moreover, apparatus for taking a photograph is displayed on a display screen during the game, and when this photograph taking apparatus is used, a photograph taking screen comprising images of the characters and a background image is formed and, upon selection by the player, this photograph taking screen can be recorded in the album as a souvenir photograph.

## Description

The present invention relates to a game device, an image display method, and a storage medium which can display virtual characters appearing in a video game with more real aspect.

Generally, the games played with a game device of this kind include various types, such as simulation games, role-playing games, combat games, puzzle games, and the like. Of these, role-playing games (RPG) are games where the player himself or herself becomes the main character in the game. These games involve scenarios or stories where, for example, the main character, accompanied by various companions, such as female companions, for instance, travels to a chosen destination in search of a designated treasure, or the like, whilst struggling against various enemies, monsters and other obstacles on the way.

In this respect, there have also been proposed games wherein the dialogue between the player represented by the main character and a companion, and the actions of the player, and so on, can cause the degree of goodwill of the companion towards the main character to change, subtly affecting the relationship of co-operation between the companion and the main character. In this way, emotions in real-life are assigned to the virtual characters in the game and the degree of these emotions are stored in the form of electronic data, the degree being changed according to the actions, dialogue, and the like, selected by the player.

In a game of this kind, an even greater sense of reality can be imparted to the game by making a virtual (female) character, who is a companion and ally of the main character in the game, follow actual female behaviour patterns.

Therefore, it is an object of the present invention to provide a game device whereby the player's interest in the game can be increased further, by introducing into the game virtual characters having behaviour patterns which approximate the behaviour patterns of actual human beings.

It is a further object of the present invention to provide a game device for achieving these behaviour patterns in a game, by focusing on the behaviour patterns of a young woman, in particular.

It is yet a further object of the present invention to provide a game device whereby general human behaviour, such as taking souvenir photographs when visiting a tourist site, or the like, can be represented in a game.

It is a further object of the present invention to provide a game device whereby the taking of photographs can be experienced artificially in a role-playing game.

It is yet a further object of the present invention to provide an image display method, wherein souvenir photograph taking points are set within a game space, and souvenir photographs are taken during the game at these souvenir photograph taking points.

It is a further object of the present invention to provide a storage medium for storing a program whereby souvenir photographs are taken artificially during a game.

In one aspect of the present invention, a game device is supplied. The game device comprises an operational input device which is used to input signals by a player, a game control device which controls the execution of a game according to a designated procedure, in response to the operational input signals from the operational input device, a display control device which controls the display of game screens on the basis of the control results of the game control device, and a display device which displays game screens on the basis of the control results of the display control device. And the game control device provides souvenir photograph taking points within the space of the game, and when the main character of the game goes to one of the souvenir photograph taking points within the game space and a predetermined operation is performed via the operational input device, the display control device creates, under the control of the game control device, a souvenir photograph taking image which is configured by combining the images of previously prepared characters in the game and a previously prepared image in the game space corresponding to that souvenir photograph taking point, and displays this image on the display device.

Here, the images of the aforementioned characters and the image corresponding to the souvenir photograph taking point are stored in a memory. Moreover, the images of the characters which are combined to form the souvenir photograph taking image may be characters selected by the player by operating the operational input device.

Furthermore, the souvenir photograph taking image displayed on the display device is also stored as a souvenir photograph image in storage device (for example, a memory card), in accordance with an operational input signal from the operational input device, and an album is created. Here, a shutter noise may be generated by sound control device in accordance with a command from said player whilst the souvenir photograph taking screen is being displayed.

According to a further aspect of the invention, an image display method, used in a game device comprising an operational input device operated by a player and a display device for displaying images in accordance with the operations performed on the operational input device, is supplied. Thereby souvenir photograph taking points are prepared in a game space, and when a main character goes to a souvenir photograph taking point in the game space, the images of previously prepared characters in the game and a prepared image in the game space corresponding to the souvenir photograph taking point are combined and displayed on the display means as a souvenir photograph taking image. In this case, a print station for taking souvenir photographs is displayed on the screen of the display device at the souvenir photograph taking point.

According to a further aspect of the invention, a storage medium, used in a game device comprising a display device and central processing unit (CPU), is supplied. The storage medium is readable by the CPU, and in which a program is stored. The program can execute the steps of processing for implementing a prescribed game, and processing for taking a souvenir photograph, whereby souvenir photograph taking points are previously set in the game space, and at any one of the souvenir photograph taking points in the game space, previously determined game characters and images prepared in the game space corresponding to the souvenir photograph taking points are combined and displayed.
Fig. 1 is a block diagram illustrating a game device capable of implementing a game relating to the present invention;
Fig. 2 is an approximate compositional diagram giving a more concrete illustration of a controller used in the game device shown in Fig. 1;
Fig. 3 is a flowchart giving an approximate illustration of a game relating to the present invention;
Fig. 4 is a flowchart giving a more concrete illustration of a portion of the steps in Fig. 3;
Fig. 5 is a diagram showing a display screen representing one scene of a game relating to the present invention;
Fig. 6 is a diagram showing one example of an album created in the game relating to the present invention;
Fig. 7 is a flowchart illustrating a portion of the processing of the game relating to the present invention;
Fig. 8 is a flowchart illustrating further processing in the portion of the game relating to the present invention;
Fig. 9 is a diagram showing one example of a display screen which is to be photographed in the step illustrated in Fig. 8;
Fig. 10 is a diagram shoving a souvenir photograph obtained by capturing the display screen illustrated in Fig. 9;
Fig. 11 is a diagram showing one example of a souvenir photograph taken at a further print station;
Fig. 12 is a diagram showing an example of a souvenir photograph taken at yet a further print station;
Fig. 13 is a diagram showing an example of a souvenir photograph taken at yet a further print station; and
Fig. 14 is a diagram showing a display screen in a case where one souvenir photograph is selected from a created album.

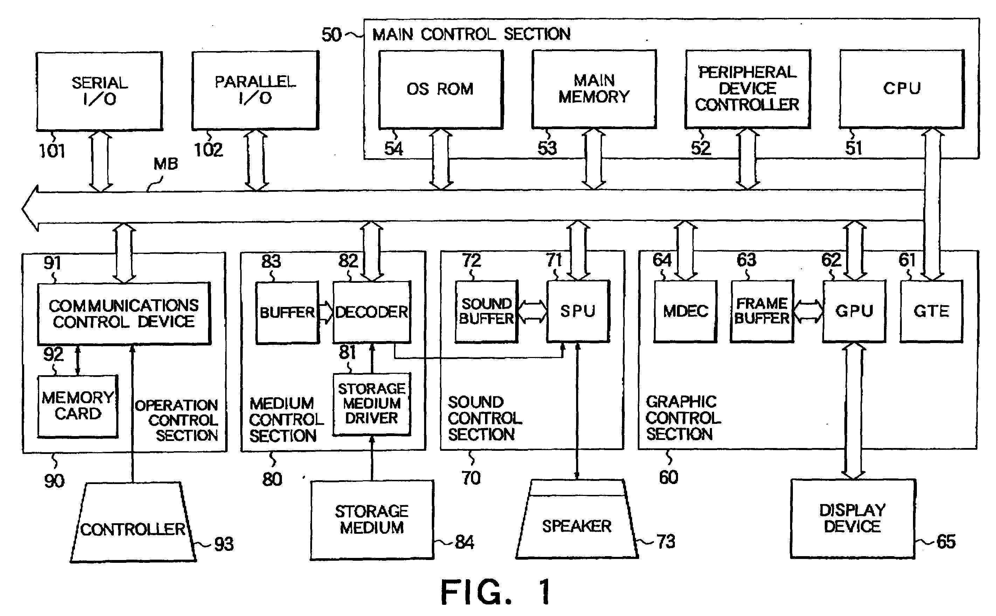

Firstly, an example of a game device applicable to the present invention is described with reference to Fig. 1.

The games device illustrated here is an example of a domestic game machine, but it might also be a personal computer device, graphics computer device, or a commercial game device.

The program constituting the game relating to the present invention is stored on a storage medium such as an optical disk 100 (a disk-shaped storage medium, such as a CD-ROM, for example), and when the ask is loaded into the game device, the aforementioned program is read out and the game is implemented, according to instructions from the user.

To give a more concrete description, as illustrated in Fig. 1, the game device of the present invention comprises a main control section 50, a graphic control section 60, a voice control section 70, a medium control section 80, and an operation control section 90, and collectively these control sections 50-90 can be called the control unit. The illustrated control sections 50-90, in other words, the control unit, are all connected to a main bus MB, and in the example depicted, a parallel I/O port 101 for connecting to other peripheral devices and a serial I/O port 102 for communicating with other game machines, and the like, are connected to the main bus MB. The main control section 50, the operation control section 90 and the medium control section 80 function as a game control section for controlling the execution of the game, in response to operations performed by a player at a controller 93 which functions as an operational input section.

The main control section 50 is constituted by a central processing device (CPU) 51, a peripheral device controller 52, main memory 53, and operating system (OS) ROM 54. More specifically, in the aforementioned main control section 50, the peripheral device controller 52 implements interrupt control, time control, memory control, direct memory access transfer control, and the like, and the main memory 53 is constituted by a 2 Mb RAM, for example, whilst the OS-ROM 54 is constituted by 512 Kb, for example, storing programs for a so-called "operating system", and the like, which controls this main memory 53, and the aforementioned graphics system 60, sound system 70, and the like.

The CPU 51 depicted is, for example, a 32-bit RISC (reduced instruction set computer) CPU, which controls the whole device by executing the operating system stored in the ROM 54. This CPU 51 has a built-in command cache and scratch pad memory, and it also manages the physical memory.

Moreover, the graphics control section 60 is constituted by a geometry transfer engine (GTE) 61, graphics processing unit (GPU) 62, frame buffer 63, and expansion circuit 64. The GPU 62 in the graphics control section 60 is connected to a display device 65. In this case, the graphics control section 60 operates as a display control section for controlling the display of game screens on the display device 65.

In the case of a standard domestic game machine, the display device 65 is a television monitor, and in the case of a personal computer or work station, it is a computer display. In a commercial game machine, a game display device is used.

The geometry transfer engine (GTE) 61 in the graphics system 60 is constituted by a coordinate calculating coprocessor which performs processing steps, such as coordinate conversion, and the like. The graphics processing unit (GPU) 62, on the other hand, draw images in accordance with drawing instructions (drawing commands) from the CPU 51. The images drawn by the GPU 62 are stored, for example, in a 1 Mb frame buffer 63. The expansion circuit 64 performs perpendicular conversion, such as a discrete cosine transform, or the like, and it is constituted by an image decoder (hereinafter, called MDEC) 64 which decodes compressed and encoded image data.

The aforementioned geometry transfer engine (GTE) 61 comprises, for example, a parallel computing mechanism for executing a plurality of computations in parallel, and it is capable of performing, at high speed, operations such as coordinate conversion for transparency conversion according to the computation request from the CPU 51 as the coprocessor of the CPU 51, and the like, light source calculation by inner product computation of normal vectors and light source vectors, and fixed-point matrix and vector calculations, for example.

Specifically, when performing calculations for flat shading, whereby a single triangular polygon is drawn in the same colour, the GTE 61 is capable of performing a maximum of approximately 1.5 million polygon coordinate calculations per second, and hence the load on the CPU 51 in this image processing system is reduced, and high-speed coordinate calculation can be performed. A "polygon" is the smallest unit used to compose a three-dimensional object displayed on a display screen, and generally, such a polygon has three or four sides, or the like.

The graphics processing unit (GPU) 62 operates in accordance with polygon drawing commands from the CPU 51 and draws polygons, and the like, to a frame buffer 63. This GPU 62 is capable of drawing up to approximately 360,000 polygons per second. Moreover, the GPU 62 has a two-dimensional address space which is independent of the CPU 51, and the frame buffer 63 is mapped to this location.

The frame buffer 63 consists of a so-called dual-port RAM, and it is capable of simultaneously receiving images from the GPU 62 or transferring data from the main memory 53, and reading out same in order that it can be displayed. More specifically, the frame buffer 63 has a capacity of 1 Mb, for example, and it is treated as a matrix of 1024 horizontal by 512 vertical pixels, each comprising 16 bits.

The frame buffer 63 is capable of outputting a desired region of the stored image display region to the display device 65. Moreover, in addition to the display region output as a video output, the frame buffer 63 also comprises a CLUT region for storing a colour lockup table (CLUT), which is referenced by the GPU 62 when drawing polygons, and the like, and a texture region for storing elements (texture) which are attached (mapped) onto the polygons, and the like, drawn by the GPU 62 by coordinate conversion.

The frame buffer 63 depicted is also capable of high-speed DMA transfer with the main memory 53.

On the other hand, the expansion circuit (MDEC) 64 in the graphic control section 60 decodes still or animated image data read out from the storage medium 84 and stored in the main memory 53, under the control of the aforementioned CPU 51, and stores the decoded image data back in the main memory 53. Specifically, the MDEC 64 is capable of high-speed execution of inverse discrete cosine transform (inverse DCT) operations, and it is also capable of expanding compressed data read out from the storage medium 84 in accordance with still colour image compression standards (known as JPEG) or cumulative media moving image encoding standards (known as MPEG).

Moreover, by storing this reproduced image data in the frame buffer 63 via the GPU 62, it can be used as a background for the image drawn by the GPU 62.

Furthermore, the sound control system, in other words, the sound system 70, comprises a sound reproduction processor (SPU) 71 which generates musical sounds and sound effects on the basis of instructions from the CPU 51, a sound buffer 72 of 512 kB, for example, for storing data for sounds, music, and the Like, and sound source data, read out from a CD-ROM, and a speaker 73 forming sound output means for outputting the musical sounds, sound effects, and the like, generated by the SPU 71.

The SPU 71 comprises an ADPCM decoding function for reproducing sound data created by adaptive differential encoding (ADPCM) of 16-bit sound data into a 4-bit differential signal, a reproducing function for reproducing sound effects, end the like, by regenerating sound source data stored in the sound buffer 72, a modulating function for modulating and reproducing sound data, and so on, stored in the sound buffer 72, and the like. More specifically, the SPU 71 comprises a built-in 24-voice ADPCM sound source having functions, such as looping and automatic modification of operating parameters on the basis of a time coefficient, and it is operated by the CPU 51. The SPU 71 also manages the independent space to which the sound buffer 72 is mapped, transfers ADPCM data from the CPU 51 to the sound buffer 72, and reproduces data by direct transfer of key on/off and modulation information.

By incorporating functions of this kind, the sound system 70 can be used as a so-called sampling sound source for generating musical sounds, sound effects, and the like, on the basis of sound data, and the like, stored in the sound buffer 72, in accordance with instructions from the CPU 51.

Next, the medium control section 80 comprises a storage medium driver 81, decoder 82, and buffer 83, and the storage medium 84 is inserted into the storage medium driver 81. The storage medium 84 used may be, for example, a CD-ROM, hard disk, optical disk, flexible disk, semiconductor memory, or the like, and in the present example, a CD-ROM is used. Accordingly, the storage medium driver 81 is a CD-ROM driver, and the decoder 82 is a CD-ROM decoder.

The storage medium driver 81 described above comprises a function for reproducing programs, data, and the like, stored on the storage medium 84, which is a CD-ROM disk, and the decoder 82 comprises a function for decoding programs, data, and the like, recorded by appending error correction (EC), for example. Furthermore, the buffer 83 is constituted by a RAM having a 32 kB storage capacity, for example, in which reproduction data from the storage medium driver 81 is stored temporarily.

Here, a disk format supporting CD-DA or CD-ROM XA data, or the like, is used, and the decoder 82 also functions as part of the sound control section 70, in order to reproduce sound data stored on the storage medium 84.

The sound data stored on the disk and reproduced by the illustrated storage medium driver 81 may be ADPCM data (CD-ROM XA ADPCM data, etc.), or it may also be so-called PCM data, wherein the sound signal is analogue/digital converted.

The ADPCM data described above is, for example, stored as 4 bits representing the differential between 16-bit digital data, and after error correction and decoding by the decoder 82, the ADPCM data is supplied to the aforementioned SPU 71, where it undergoes processing, such as digital/analogue conversion, and the like, and is then transmitted to a speaker 73.

On the other hand, sound data created from recorded PCM data in the form of 16-bit digital data, for example, is decoded by the decoder 82 and then used to drive the speaker 73. The audio output from the aforementioned decoder 82 is initially supplied to the SPU 71, where it is mixed with the output of the SPU and passed through a reverb unit to form a final audio output.

The operation control section 90 provided in the game device illustrated in Fig. 1 comprises a communications control device 91 and an auxiliary memory (memory card) 92 for controlling communications with the CPU 51 via the main bus B. The communications control device 91 is connected to a controller 93 which inputs commands from the user, in other words, the player. Here, the auxiliary memory 92 is used to input instructions from the controller 93 and to store game settings, and the like.

The controller 93 is an interface for transmitting the intentions of the user to the application, and in order to input instructions from the user, it comprises, for example, 16 command keys, the states of these command keys being transmitted to the communications control device 91 at approximately 60 times a second by synchronized communication in accordance with commands from the communications control device 91. The communications control device 91 also transmits the states of the command keys in the controller 92 to the CPU 51. The controller 93 also comprises two connectors located on the main body thereof, in addition to which it can be connected to a plurality of controllers by means of a multi-tap.

Thereby, instructions from the user are input to the CPU 51, which conducts processing in accordance with the instructions from the user, on the basis of the game program, or the like, being executed.

If it is necessary to store the settings for the game being executed, or the game score at the end of a game or during a game, then the CPU 51 transmits the data to be stored to the communications control device 91, and this communications control device 91 stores the data from the CPU 51 in the memory card 92. This memory card 92 is separate from the main bus B, and therefore it can be installed and detached whilst the power supply is on. Thereby, the game settings, and the like, can be stored on a plurality of memory cards 93.

Operations such as reading out programs, displaying or drawing images, and the like, require a large amount of image data to be transferred at high speed between the main memory 53, GPU 62, MDEC 64, decoder 82, and the like.

Therefore, this image processing system is capable of conducting DMA transfer for direct data transfer between the main memory 53, GPU 62, expansion circuit (MDEC) 64 and decoder 82, etc., under control implemented by the peripheral device controller 52, without passing through the CPU 51. Consequently, the load imposed on the CPU 51 by data transfer can be reduced and high-speed data transfer can be achieved.

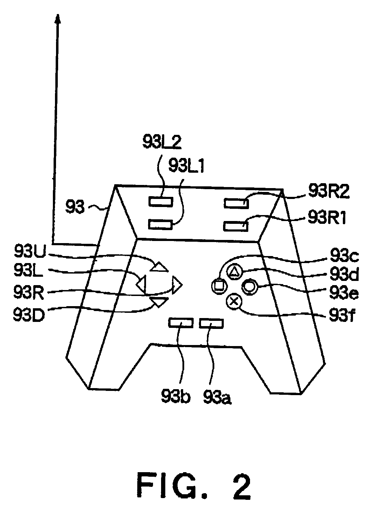

Next, a concrete description is given of the controller 93 used in the game device illustrated in Fig. 1, with reference to Fig. 2. The controller 93 comprises an approximately board-shaped main unit, on the top side face of which are provided a first left button 93L1, a second left button 93L2, a first right button 93R1, and a second right button 93R2. Furthermore, on the left-hand side of the upper face of the main unit of the controller 93, there are provided an up key 93U, down key 93D, left key 93L, and right key 93R, and in the central portion of the upper face of the main unit, there are provided a rectangular-shaped start button 93a and selector button 93b. Moreover, a first button 93c, second button 93d, third button 93e and fourth button 93f are provided on the right-hand side of the upper face of the main unit of the controller 93, and square, triangular, circular and X symbols are marked respectively on the first to fourth buttons 93c - 93f. The buttons and keys described above are operated by the player, whereby operating signals corresponding to the game being executed are output.

Of these buttons and keys, the up key 93U, down key 93D, left key 93L and right key 93R output commands to the CPU 51 shown in Fig. 1 for moving the character on the display screen of the display device 65 upwards, downwards, leftwards and rightwards, for example, or commands for moving between icon selections on a menu screen.

When the start button 93a is operated by the player, an instruction to start the game program loaded from the aforementioned storage medium is issued to the CPU 51, and when the select button 93b is operated by the player, various selections relating to the game program data loaded from the storage medium 84 to the main memory 53 are instructed to the CPU 51.

Moreover, various different functions are assigned by the game program loaded from the storage medium 94 to the first to fourth buttons 93c-f, first left button 93L1, second left button 93L2, first right button 93R1, and second right button 93R2.

In the game device illustrated in Fig. 1, if the power supply is turned on whilst a storage medium 84 is inserted in the storage medium driver 81, then firstly, the CPU 51 implements the operating system (OS) stored on the ROM 54. By implementing the operating system, the CPU 51 controls the aforementioned graphic control section 60, sound control section 70, and the like. In concrete terms, when the operating system is implemented, the CPU 51 performs initialisation of the whole device, including operational checking, and the like, whereupon it controls the medium control seation 80.

Meanwhile, the operating system instructs the storage medium driver 81 to read out program data from the storage medium 84. Accordingly, the storage medium driver 81 reads out image, sound and program data from the storage medium 84. The image sound and program data thus read out is then supplied to a decoder 82, which performs error correction on the read out data.

Of the error corrected data in the decoder 82, the image data is transferred via the main bus MB to the expansion circuit (MDEC) 64. In this example, image data compressed by intra-coding based on MPEG (Moving Picture Engineering Group) standards for moving images, and JPEG (Joint Picture Engineering Group) standards for still images, are supplied to the expansion circuit 54, in a variable length code (VLC) encoded form. Consequently, the expansion circuit 64 performs expansion processing on the compressed images, and the expanded image data is then supplied to the GPU 62 where it is written to the non-display area of the frame buffer 63.

Here, the expansion processing in the expansion circuit 64 involves decoding (decoding of data encoded by VLC), inverse quantization, IDCT (Inverse Discrete Cosine Transform), restoration of intra-coded images, and the like. The frame buffer 63 comprises a display area and a non-display area, the display area being a region where data to be displayed on the image area of the display device 65 is transferred, and the non-display area being a region where data that is not to be shown on the display device 65 is transferred. In the case of this example, the non-display area contains data such as data for defining skeletons, model data for defining polygons, animation data for causing a model to move, pattern data indicating the details of each animation, texture data, colour palette data, and the like.

Here, texture data is two-dimensional image data and colour-palette data is data for indicating the colour of the texture data, and the like.

Returning to Fig. 1, the sound data which has been encoded by ADPCM, or the like, is error corrected in the decoder 82, and then supplied to the main memory 53 or sound processor (SPU) 71, and written into the main memory 53 or sound buffer 72.

The error corrected program data in the decoder 82 is transferred to, and written into, the main memory 53.

Thereafter, the CPU 51 implements the game on the basis of game program data stored in the main memory 53 and commands supplied by means of the player operating the controller 93. In other words, the CPU 51 controls image processing, sound processing and internal processing, on the basis of instructions supplied by the controller 93.

Control of image processing involves the CPU 51 performing operations such as calculating skeleton coordinates and polygon vertex coordinates from the pattern data corresponding to the animated image for each character, calculating the obtained coordinate data, supplying the obtained three-dimensional coordinate data and viewpoint position data to the GPU 62, issuing drawing commands containing address data in the display area of the frame buffer 63 designated by the GPU 62, and brightness data, and the like. In controlling sound processing, on the other hand, the CPU 51 issues sound output commands to the sound processor (SPU) 71, and sets levels, reverb, and the like. Furthermore, in controlling internal processing, the CPU 51 performs calculations in response to the operations of the controller 93, for example,

Consequently, the CPU 51 controls the display of images and the generation of music and wound effects, by means of the aforementioned graphics control section 60, sound control section 70, and the like, in accordance with inputs from the player.

Below, a description is given of a game of the present invention using the game device described above. Program data relating to the game is stored on the storage medium 84 (here, a CD-ROM) before the start of the game, along with relevant image data and sound data, and when the player presses the start button 93a, this data is read into the game device illustrated in Fig. 1 in the format described above.

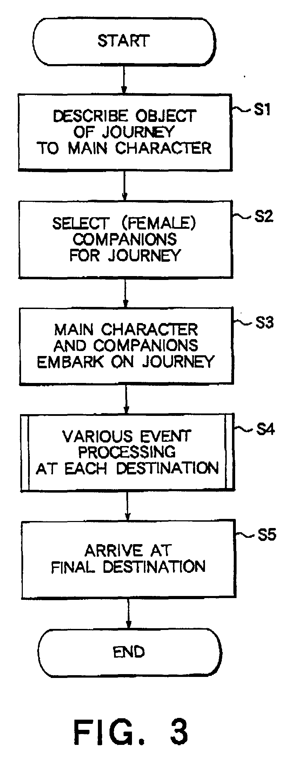

An approximate description of a role-playing game relating to the present invention is now given with reference to Fig. 3. Firstly, in Fig. 3, when the game is started, the journey destination, and the like, are indicated to the main character at step S1. More specifically, the main character is instructed to travel through the country depicted in the game, in search of a medicine that may save the life of the king that the character serves. This instruction is transmitted to the player by sound, and is also displayed to the player as text on the screen, for example. Therefore, in the state at step S1, the graphics control section 60 and sound control section 70 are driven by the CPU 51.

Next, at step S2, two females characters are selected as companions to travel with the main character on his or her journey. In the game illustrated, four females, each having mutually different character traits, are prepared, and names are given respectively to these female characters. Here, to provide a general description, the four female characters axe named A, B, C, D. The four female characters A, B, C, D not only have mutually different character traits, active ability, interests, and the like, but are also designed in such a manner that they have different compatibilities when two such characters are selected, and furthermore, their degree of co-operation with the main character during combat varies depending on their dialogue with the main character, the main character's behaviour, and the like.

Describing this with regard to the hardware illustrated in Fig. 1, the names A, B, C, D of the four female characters, and the character traits, active capacity, interests, compatibility, and the like, thereof are stored as a list on the storage medium 84, and this list is transferred into the main memory 53 when the game starts. Moreover, the list also stores the level of trust, in other words, the level of co-operation, that the female characters display towards the main character, this level varying according to the results of the selections made by the main character.

Step S2 may be composed in such a manner that the player can choose the equipment carried by the companions. In this case, by storing a table of equipment in the main memory 53 in the form of a list, along with numerical data representing good or bad emotions of each female character with respect to the items of equipment, it is possible to create virtual female companion characters which approximate the emotions and behaviour of real women more closely.

Moreover, in this game, in order to approximate the emotions and behaviour of real women, the clothing worn by the virtual female characters may also be selected by the player. Specifically, clothing particular to each female character and clothing common to the four female characters is prepared, respectively, and the player can select clothing according to his or her wishes and cause the two female companions to wear these sets of clothing. In this case, the clothing for each of the female characters is linked with an index representing a lever of goodwill towards that selection and stored as a clothing list in the storage medium 84. When the game is started, this clothing list is transferred to the main memory 53, and the clothing list is then transmitted to the frame buffer 63 and displayed as an image.

When the selection in step S2 has been completed, the main characters and the two female companion characters depart on the game journey, as described in step S3.

As shown in Step S4, during the journey, the three characters visit a number of towns set in the game, and they encounter a variety of events. For example, they may encounter enemies or monsters in a town they visit and enter into combat with these enemies, and the like, or they may become involved in unexpected situations. The level of goodwill of the two female characters towards the main character changes depending on the method of combat and method of dealing with situations adopted by the main character, and consequently, the level of co-operation shown by the two companions towards the main character during the subsequent journey also changes.

If, as a result of combat undertaken in step S4, the main character representing the player is killed during the fighting, then the game ends immediately. In order to simplify the explanation, here it is assumed that the main character and the two female companions have arrived at their destination, as illustrated in step S5. In some cases, the main character representing the player may enter into a new relationship with one of the female companions, in response to the level of goodwill generated by their arrival at the destination.

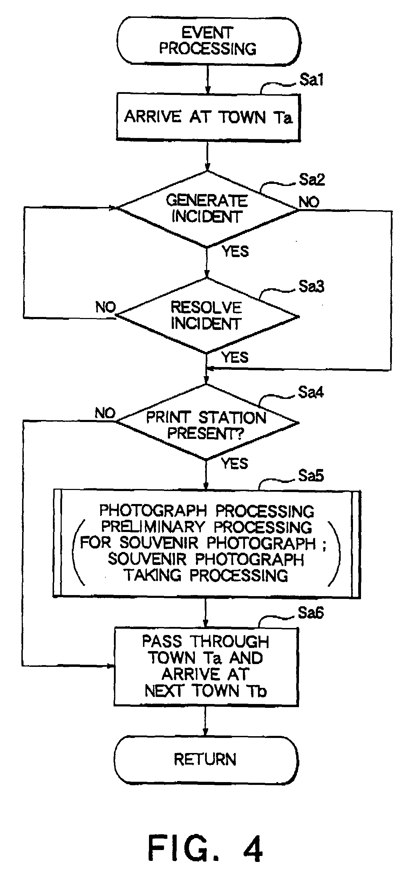

Step S4 (Fig. 3), which is the characteristic feature of the game relating to the present invention, is now described in more concrete terms with reference to Fig. 4. In Fig. 4, it is assumed that the main character (here called "K"), and the female companions selected by the player (here, called "A" and "B") have arrived from a town (Tx) at a town Ta in the game. At town Ta, the main character K and the companions A and B encounter an incident (step Sa2). This incident may involve a fight with enemies or monsters, or it may be any other type of occurrence. Incidents of this kind are previously specified for each town by the game program, and furthermore, the game program can be created in such a manner that an incident only occurs when the player makes a particular selection.

In step Sa2, when an incident occurs, the main character K and the companions A and B co-operate together to deal with the incident. In this case, the level of co-operation displayed by the companions A, B towards the main character K varies depending on the goodwill of each companion character A, B towards the main character K. When the incident has been resolved, the game advances to step Sa4. If the characters discover a print station located a souvenir photograph taking point whilst walking through the town, then the game advances to step Sa5. This signifies that souvenir photograph taking points have already been prepared in the game space.

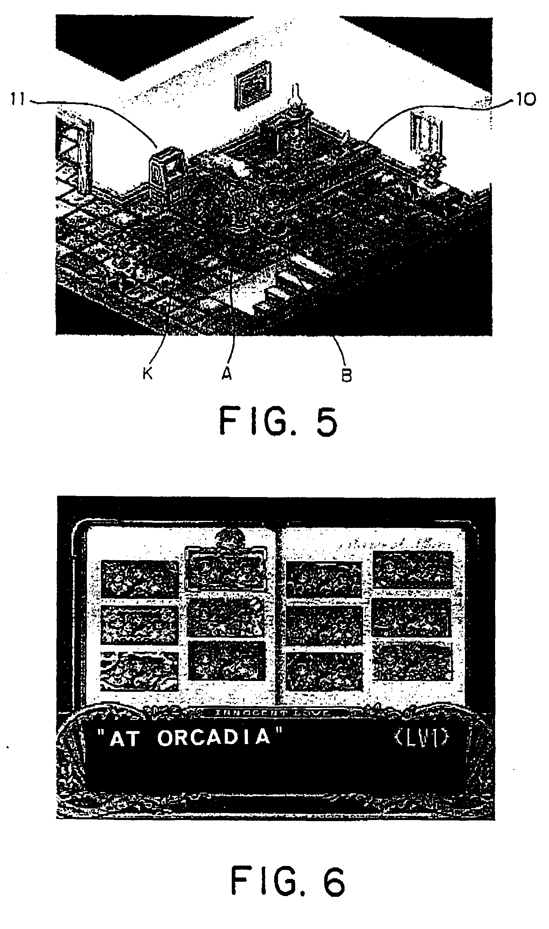

A display screen shown when a print station has been discovered is illustrated in Fig. 5, which shows a bird's-eye view of the interior of a lobby, or the like. In this room, there is an L-shaped counter 10, and a print station 11 is located at a souvenir photograph taking point alongside the counter 10. Using this print station 11, a souvenir photograph can be taken artificially during the game. This picture is stored as a JPEG compressed and encoded image, or the like, on the storage medium 84 (Fig. 1), in the form of a two-dimensional image, and during the game it is decoded by the decoder 82, and then expanded by the expansion circuit 54, in which state it is stored in the main memory 53.

Fig. 5 shows a state where the main character K and female companions A and B have entered into a room where a print station 11 is located.

In the situation shown in Fig. 5, when the print station 11 is discovered, a photograph taking process created by preliminary processing for a souvenir photograph and souvenir photograph taking processing is implemented, whereby a souvenir photograph is taken artificially in the game. Souvenir photographs taken during a game are collected in an album, as illustrated in Fig. 6.

In the case of the souvenir photographs shown in Fig. 6, a plurality of souvenir photographs have been taken in a town called Orcadia. The album such as that shown in Fig. 6 is stored in the memory card 92 shown in Fig. 1, under the control of the CPU 51. This album can be viewed at any time by means of the player implementing a prescribed operation.

At step Sa5 in Fig. 4, when taking of the souvenir picture has been completed and the souvenir photograph has been added to the album, the party comprising the main character K and companions A and B head for another town Tb (step Sa6), whereupon the event processing illustrated in Fig. 4 is continued.

The actions described above and actions similar to these are performed in various tons, until the target jewel or medicine has been found. In this way, in the game described above, the game characters can be made artificially to perform actions which resemble the actions of people in real society when they are travelling, and hence the player can be made to feel more closely associated with these characters. Specifically, according to the present invention, photographs of the characters can be taken artificially during the game.

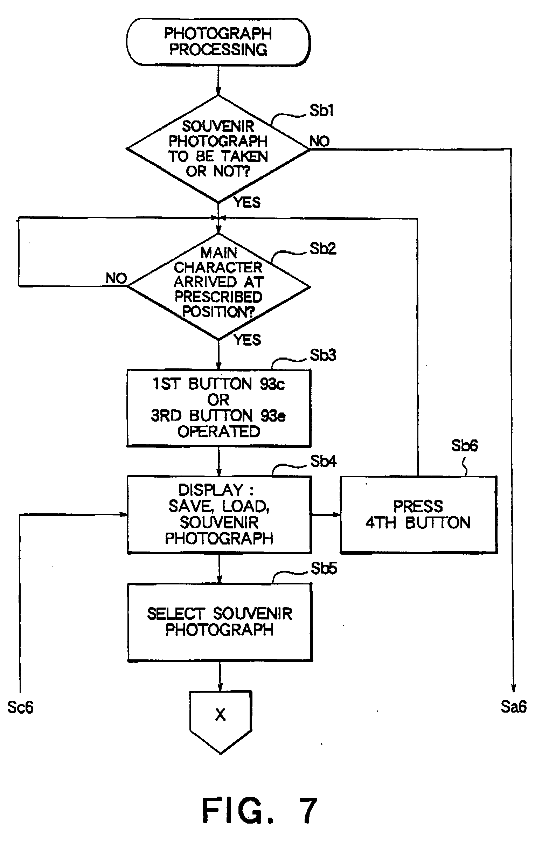

Next, the souvenir photograph preliminary processing implemented in the photograph processing step Sa5 shown in Fig. 4 is described in more concrete terms with reference to Fig. 7. Firstly, as shown in Fig. 5, when the main character K and companions A, B arrive at a place where a print station 11 is located, in other words, a souvenir photograph taking point, and the player, represented by the main character K, discovers the print station 11, then the game program enters the souvenir photograph preliminary processing illustrated in Fig. 7, in the photograph processing step Sa5 shown in Fig. 4.

In Fig. 7, when the player decides to take a souvenir photograph (step Sb1 in Fig. 7), the player moves to a prescribed position in front of the print station 11, by using the up key 93U, down key 93D, left key 93L and right key 93R. In this case, the two companions A, B move in the direction of the print station 11 along with the main character K. Thus, it is clear that, in this state, the main character K can be controlled via the keys of the controller 93. If the player does not take a souvenir photograph in this state, then the game advances to step Sa6 shown in Fig. 4.

Here, at step Sb1, after the player has decided to take a souvenir photograph, and when the main character K is standing at a prescribed position of the screen (step Sb2), the first or third buttons 93c or 93e marked with a square shape or circle shape on the controller 93 shown in Fig. 2 may be operated. In this state, if either one of these buttons is selected (step Sb3), then the display screen displays three choices "save", "load" and "souvenir photograph" (Sb4). This display screen enables the player to select between saving data to the memory card illustrated in Fig. 1, loading data from the memory card 92, or storing a souvenir photograph on a memory card 92. In the present example, the "save" and "load" functions do not relate directly to the present invention, and hence it is assumed that the player selects the "souvenir photograph" option (step Sb5). This selection is actually made by means of the player pressing the first button 93c or third button 93e on the controller 92, in a state where the cursor is aligned with the "souvenir photograph" text on the display screen.

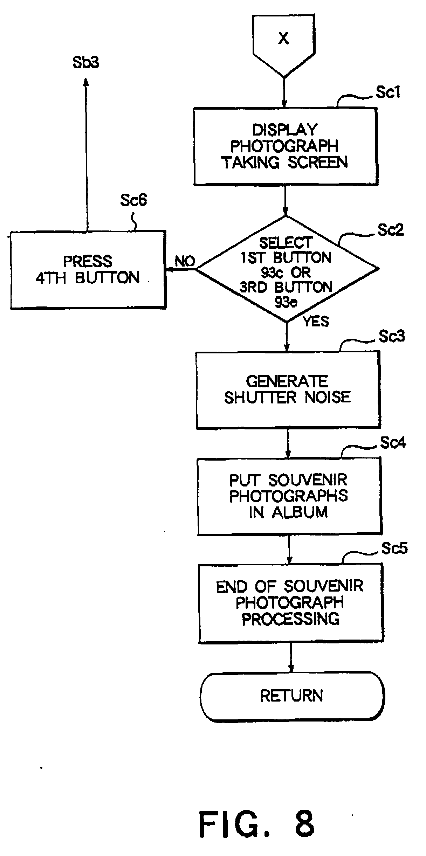

In this way, when "souvenir photograph" is selected on the display screen showing three choices (step Sb5), the souvenir photograph preliminary processing is completed, and the program advances to souvenir photograph taking processing, as shown in Fig. 8.

With reference to both Fig. 8 and Fig. 4, in the souvenir photograph processing illustrated in Fig. 8, firstly, an image which is to be captured as a photograph is displayed on the display device 65 (step Sc1 in Fig. 8). On the photograph image, it is possible for only the two female companions A, B to be shown, or the main character K may be shown along with the two female characters. When a souvenir photograph is taken, the characters photographed have a uniform pose, and the background of the souvenir photograph is a background image corresponding to the town in the game space and the point that the photograph was taken.

Moreover, the interest generated by the game can be increased yet further if the clothing being worn by the characters when their photograph is taken at the print station is reflected in the souvenir photograph. In this way, reflecting the clothing worn in the souvenir photographs has the advantage of raising the player's interest in the souvenir photographs, in cases where the player is able to select the clothing, and the like, worn by the companion characters, by himself or herself.

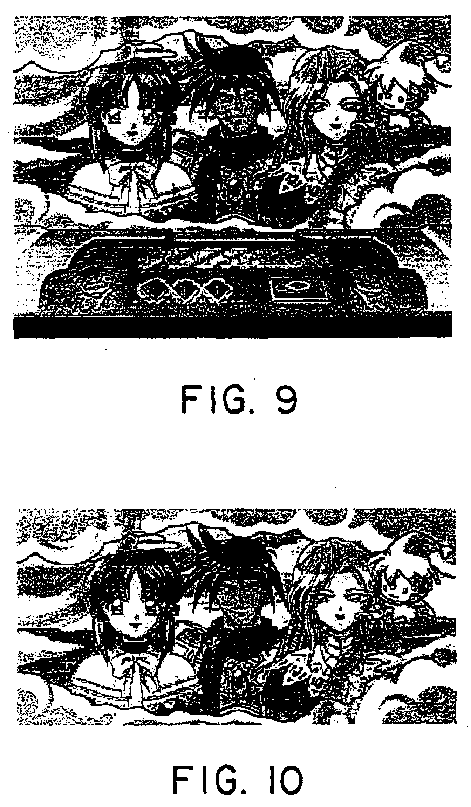

Fig. 9 shows one example of a photographing screen at step Sc1 in Fig. 8, and in this screen, the two female companions A and B are standing on either side of the main character K. This screen is also known as the photograph taking screen. It can be seen that the lower portion of Fig. 9 contains an image of the print station in this photograph taking screen. The picture of the frame forming a portion of the background image is fixed for each print station in the game and there are mutually different frame images for the plurality of print stations located at different photograph viewpoints.

Here, describing the operation of displaying a photograph taking screen, as shown in Fig. 9, with reference to Fig. 1, for each character being photographed, character image data required for souvenir photographs is previously compressed and encoded and stored on the storage medium 84. In this case, the character image data does not simply relate to the character's facial appearance, but also to their clothing, and if appropriate, the facial appearance and clothing data can be combined. In any case, the character image data relating to the character and the background image data relating to the background image are synthesized under the control of the CPU 51 and GPU 62 (Fig. 1) and stored in the frame buffer 63, whereupon the data is displayed on the display device 65 under the control of the GPU 62. The image data required for creating a "souvenir photograph" is decoded by the decoder 82, and then expanded by the expansion circuit (MDEC) 64.

On the other hand, if the fourth button 93f marked with an "X" symbol is pressed when the three choices are being displayed at step Sb4 shown in Fig. 7 (Sb6), then the program returns to step Sb1 in Fig. 7, and the game is returned to a state where the player can control the main character K.

As illustrated in step Sc1 in Fig. 8, if the player selects the first button 93c or the third button 93e whilst the photograph taking screen is shown on the display device 65, as shown in step Sc2, then an artificial shutter noise is generated (step Sc3) to inform the player that a souvenir photograph has been taken. This means that a sound source for a shutter sound is stored on the storage medium 93 as program data for implementing a "souvenir photograph", and this sound source is decoded by the decoder 82 and then supplied under the control of the CPU 51 from the sound processor (SPU) 71 to the speaker 73, where it is output as a shutter noise.

Fig. 10 shows one example of a souvenir photograph wherein the photograph taking screen at the print station in Fig. 9 has been photographed.

The souvenir photograph obtained by selecting "souvenir photograph" as described above is transferred under the control of the CPU 51 from the frame buffer 63 via the GPU 62 to the memory card 92 in the operation control section 90, and an album such as that shown in Fig. 6 is automatically created (step Sc4), whereupon souvenir photograph processing ends (step Sc5). In step Sc5, when souvenir photograph processing has been completed, the program advances to step Sa7 in Fig. 4, where the operations described above are repeated.

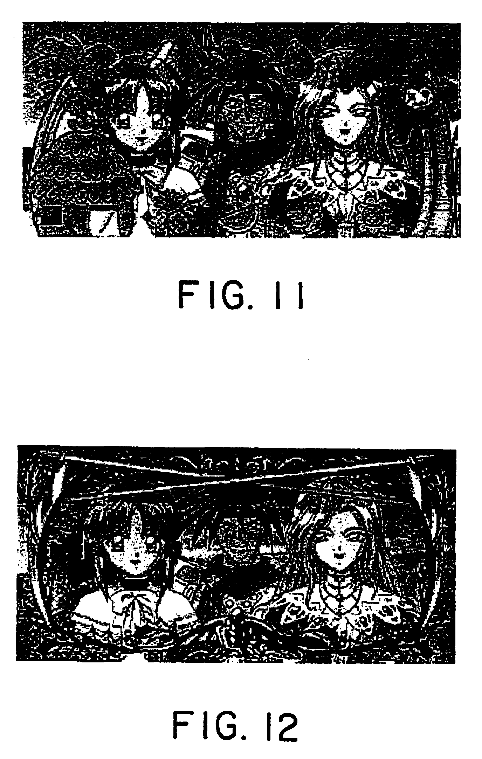

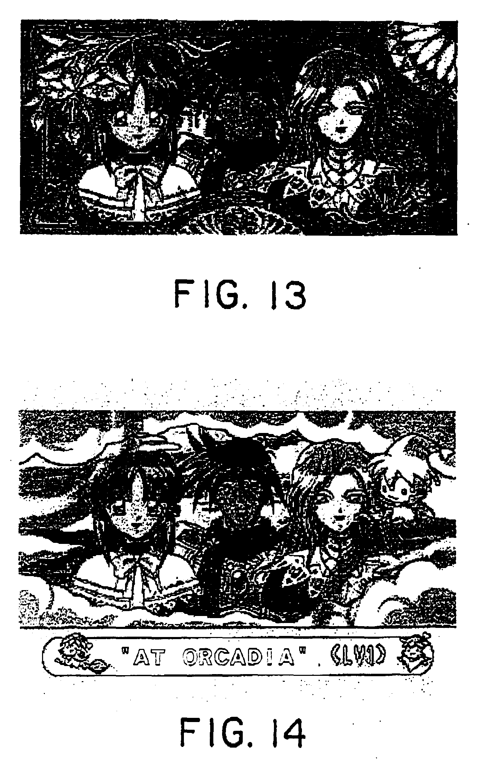

Figs. 11, 12 and 13 show further examples of souvenir photographs obtained by photographing the main character K and companions A and B at different locations. Fig. 11 shows a souvenir photograph at a photographic location characterized by a tropical style of frame. Fig. 12 shows a souvenir photograph at a photographic location characterized by a holly leaves style of frame. Moreover, Fig. 13 shows a souvenir photograph at a photographic location characterized by a flower frame. In all of Figs. 11 to 13, the clothing worn by the main character K and the two female companions A and B is the same, but it is also possible to change the clothing of the characters captured on the photograph, depending on the location. In this case, it is necessary to store image data relating to the clothing worn by the photographed characters on the storage medium 84, in the form of a list.

Fig. 14 shows a display screen in a case where one souvenir photograph has been selected from the album stored in the memory card 92 shown in Fig. 6. Here, the souvenir photograph in Fig. 10 has been selected from the album. The album can be viewed by the player in this way at any time, by means of the player performing a prescribed operation. Thus, the album records, in the form of souvenir photographs, the places that the characters have visited during their journey, and the type of clothing that they were wearing at that time.

Looking again at Fig. 8, if the player presses the fourth button 93f on the controller 93 (step Sc6) whilst the photographing screen is being displayed (step Sc1), then the game returns to the three choice display at step Sb4, illustrated in Fig. 7, and if the fourth button 93f is pressed again in this state, then the game returns to the state prior to step Sb1, and the player becomes able to control the main character K by means of the controller 93.

The embodiment described above related to a case where a CD-ROM was used as a storage medium 84, but the present invention is not limited to this, and it may be applied similarly in cases where other storage media, for example, a semiconductor memory, or the like, is used. Moreover, the present invention is applicable not only to domestic game devices, but also to commercial game machines, personal computers, or the like.

As described above, according to the present invention, by observing the behaviour of people when they are travelling and making the behaviour of characters in a game approximate the behaviour of actual people, it is possible to make the player associate more closely with the game characters, hence raising his or her interest in the game. Moreover, by enabling the player to experience artificially a journey with characters of the opposite sex having different personalities, end by means of the journey being recorded, it is possible for the player to remember game experiences which are readily forgotten. Furthermore, in the present invention, it is possible to record information, such as the places that the characters visited during their journey and the clothing that they were wearing at that time, in the form of souvenir photographs.

## Claims

1. A game device which comprises an operational input device (93) which is used to input signals by a player, a game control device (50) which controls the execution of a game according to a designated procedure, in response to the operational input signals from the operational input device (93), a display control device (60) which controls the display of game screens on the basis of the control results of the game control device (50), and a display device (65) which displays game screens on the basis of the control results of the display control device (60), characterized in that the game control device (50) provides souvenir photograph taking points within the space of the game, and when the main character of the game goes to one of the souvenir photograph taking points within the game space and a predetermined operation is performed via the operational input device (93), the display control device (60) creates, under the control of the game control device (50), a souvenir photograph taking image which is configured by combining the images of previously prepared characters in the game and a previously prepared image in the game space corresponding to that souvenir photograph taking point, and displays this image on the display device (65).

2. The game device according to claim 1, characterized in that the game control device (50) comprises a memory (53) which stores the images of the characters and images corresponding to the souvenir photograph taking points.

3. The game device according to claim 1 or 2, characterized in that the images of the characters which are combined as the souvenir photograph taking image are the image of the characters selected by the player using the operational input device (93).

4. The game device according to claim 1, 2 or 3, characterized in that the game control device (50) further comprises a storage device (53) which stores the souvenir photograph taking image displayed on the display device (65) as a souvenir photograph image in accordance with the operational input signal from the operational input device (93).

5. The game device according to claim 1, 2, 3 or 4, characterized in that an image of a print station for taking souvenir photographs is displayed at the souvenir photograph taking points.

6. The device according to any one of claims 1 to 5, characterized in that a sound control device (70) produces a shutter noise when a predetermined operation is performed whilst the souvenir photograph taking image is displayed on the display device (65).

7. An image display method used in a game device which includes an operational input device (93) operated by a player and a display device (65) which displays images in accordance with the operations performed on the operational input device (93), characterized in that it comprises the steps of:
previously preparing souvenir photograph taking points in a game space;
creating a souvenir photograph taking image by combining images of previously prepared characters in the game and a prepared image in said game space corresponding to one of the souvenir photograph taking points, when a main character goes to the souvenir photograph taking point in the game space; and
displaying the souvenir photograph taking image to the display device (65).

8. The image display method according to claim 7, characterized in that print stations for taking souvenir photographs are displayed at the souvenir photograph taking points.

9. The image display method according to claim 7 or 8, characterized in that the characters displayed on the photograph taking display screen are characters selected by the player by operating the operational input device (65).

10. The method according to claim 7, 8 or 9, characterized in that the souvenir photograph taking image is stored and displayed as a souvenir photograph, when a predetermined operation is performed via the operational input device whilst the souvenir photograph taking image is displayed.

11. The method according to claim 7, 8, 9 or 10, characterized in that the image of an album to which the photograph taking images are attached is displayed on the display device (65).

12. The image display method according to claim 11, characterized in that the album can be displayed by a predetermined operation of the operational input device (65).
